# EUROPÄISCHE PATENTANMELDUNG

(11) **EP 1 191 237 A2**
(43) Veröffentlichungstag der Anmeldung: **27.03.2002**
(21) Anmeldenummer: 01115709.6
(22) Anmeldetag: 06.07.2001
(51) Int. Cl.: F16B 19/10

(54) **Korrosionsfester Niet und Verfahren zu seiner Herstellung**

(30) Priorität: 21.09.2000 DE 10046809
(71) Anmelder: Knoche, Alfons, D-58730 Fröndenberg (DE)
(72) Erfinder: Alfons, Knoche, 58730 Fröndenberg (DE); Gülde, Peter, 58730 Fröndenberg (DE)
(74) Vertreter: Schwabe - Sandmair - Marx

(57) **Zusammenfassung**

Die Erfindung betrifft einen Niet, insbesondere einen Aluminium-Blindniet zur Befestigung schwimmender Platten, mit einem Nietschaft (5) und einem Nietkopf (6), wobei zumindest der Nietkopf mit einer witterungsbeständigen Farbschicht (13) versehen ist, dadurch gekennzeichnet, dass er zumindest auf den Teilen seiner Oberfläche (7, 14, 16), die im Befestigungszustand zu möglichen Flüssigkeitsansammlungsräumen (11, 14, 15) hin liegen, eine Korrosionsschutzschicht aufweist. Sie betrifft ferner ein Verfahren zur Herstellung eines solchen Niets.

## Beschreibung

Die Erfindung betrifft einen Niet, insbesondere einen Aluminium-Blindniet zur Befestigung schwimmender Planen sowie ein Verfahren zu dessen Herstellung.

Solche Nieten werden insbesondere bei Befestigungsverfahren in der Fassadentechnik verwendet, zum Beispiel bei vorgehängten Fassadea, die als Witterungsschutz dienen und zusammen mit einer Wärmedämmung an einer entsprechenden Unterkonstruktion befestigt werden, wobei die Fassadenplatten unter anderem HPL-Platten oder Faserzementplatten sind, jedoch werden auch des öfteren Fassaden mit einer Unterkonstruktion aus Aluminium gebaut. An solchen Unterkonstruktionen aus Aluminium kann nicht eine herkömmliche Verschraubung mit Stahlschrauben erfolgen, sondern es muss mit Aluminium-Blindnieten gearbeitet werden.

Die Köpfe dieser Nieten müssen mit einer witterungsbeständigen (auch UV-beständigen) Farbe entsprechend der Farbe der anzubringenden Platten beschichtet werden, um ein homogenes äußeres Bild der Fassade bereitzustellen. Ferner müssen die Platten schwimmend befestigt werden, d. h. an den Befestigungsstellen muss etwas Spiel für die Ausdehnung der Fassadenplatten bereitgestellt werden, die je nach Temperatur (Witterung) eine Wärmeausdehnung bzw. -kontraktion erfahren und so nach allen Seiten wandern können müssen. Die Ausdehnung der Platten darf nicht behindert werden; Befestigungselemente, die ohne Spiel angebracht werden, würden bei der Ausdehnung der Platten deformiert und nach entsprechenden Lastwechseln brechen. Deshalb wird für die Ausdehnung die Bohrung für die Befestigungsmittel im Durchmesser um einige Millimeter größer gewählt, als der Durchmesser der Befestigungsmittel, so dass sich die Platten ausdehnen können. Ebenso haben die Befestigungsmittel einen Luftspalt zwischen der Kopfunterseite zu der Plattenoberfläche hin, so dass die Platten ohne weiteres gleiten können.

Diese Konstruktionsnotwendigkeit hat aber den Nachteil, dass sich im Spalt zwischen dem Nietdurchmesser und dem Bohrungsdurchmesser sowie unter dem Kopf Kammern bilden, in denen sich Regenwasser ansammeln kann, das sich beispielsweise mit ausgespültem Zement vermischt und alkalische Flüssigkeiten bzw. Laugen bildet, welche den Nietschaft und die Unterseite des Nietkopfes umspülen und kontinuierlich einen Aluminium-Niet angreifen. Dies kann bis zur völligen Auflösung des Niets (Bruch) führen.

Die Erfindung hat es sich deshalb zur Aufgabe gemacht, einen Niet, insbesondere einen Aluminium-Niet, bevorzugt einen Aluminium-Blindniet zur Befestigung schwimmender Platten bereitzustellen, dessen Nietkopf mit einer witterungsbeständigen Farbschicht versehen ist und der eine ausreichende Lebensdauer aufweist.

Die Aufgabe wird erfindungsgemäß dadurch gelöst, dass der Niet zumindest auf den Teilen seiner Oberfläche, die im Befestigungszustand zu möglichen Flüssigkeitsansammlungsräumen hin liegen, eine Korrosionsschutzschicht aufweist. Die Korrosionsschutzschicht verhindert den Angriff des Niet durch alkalische Flüssigkeiten bzw. Laugen, die sich in den Kammern ansammeln und sorgt somit dafür, dass der Niet über eine lange Lebensdauer unversehrt bleibt und seine Befestigungsaufgaben erfüllen kann.

Bei einer bevorzugten Ausführungsform der Erfindung wird der Niet als Blindniet mit einem Hülsenschaft ausgebildet, wobei sich die Korrosionsschutzschicht über die gesamte Außenfläche des Niets erstreckt, an der Oberfläche des Kopfes unter der Farbschicht liegt und sich insbesondere am offenen Niethülsenschaftende zumindest teilweise über die innere Oberfläche erstreckt, bevorzugt im Bereich des auszuformenden Schließkopfes. Damit erhält der Niet einen vollumfänglichen Schutz gegen Korrosion.

Bei Nieten, die auf der äußeren Nietkopfoberfläche mit einer witterungsbeständigen Farbschicht versehen sind, ist die Bereitstellung eines Korrosionsschutzes in Form einer Korrosionsschutzschicht keineswegs eine einfach durchzuführende oder selbstverständliche Lösung. Diese Korrosionsschutzschicht muss nämlich mit der Farbschicht auf dem äußeren Teil des Nietkopfes verträglich sein, welche regelmäßig lediglich auf speziellen Grundierungen ihren ausreichenden Halt und eine ausreichende Festigkeit entwickeln kann. Die angesprochene Farbschicht ist an den Fassaden in der Farbgebung immer identisch mit der Fassadenfarbe und sie muss eine ausreichende Härte und Kratzfestigkeit aufweisen, um den Gesamteindruck nicht zu verschlechtern. Diese Eigenschaften sind sehr kritische Eigenschaften für den gesamten Baubetrieb, da bei Reklamationen an den Nieten wegen abblätternder Farbe oder Nietbruch die Neuvernietung der Fassaden, insbesondere bei Hochhäusern sehr hohe Kosten verursachen würde; die Häuser müssten nämlich zur Behebung der Mängel vollständig neu eingerüstet werden, was kaum bezahlbare Kosten mit sich bringt.

Gemäß einer bevorzugten Ausführungsform der vorliegenden Erfindung wird somit ein Niet bereitgestellt, der an mit der Farbschicht versehenen Stellen, insbesondere am Nietkopf mindestens eine Vermittlerschicht zwischen der Korrosionsschutzschicht und der Farbschicht aufweist. Eine solche Vermittlerschicht kann ein weitere Spezialgrundierung mit chemischen Zusätzen sein, die auf die Korrosionsschutzschicht aufgetragen wird, um so die gewünschte Anbindung der Farbschicht zu gewährleisten. Bevorzugt besteht die Vermittlerschicht aus einem Material, welches die Beständigkeit der Farbschicht sicherstellt, und insbesondere deren Haftung. Bei einer bevorzugten Ausführungsform weist der Niet unter Farbschicht und insbesondere über der Vermittlerschicht eine Grundierungsschicht auf.

Die Korrosionsschutzschicht kann eine mehrlagige Schicht sein und sie ist in bevorzugter Ausführungsform eine Schutzschicht gegen alkalische Korrosion, insbesondere bei Aluminium-Nieten.

Vorzugsweise weist die Korrosionsschicht eine flexible Härte auf, die es ihr gestattet, sich bruchlos zu dehnen, insbesondere bei der Materialaufweitung beim Herstellen des Schließkopfes. Wie oben schon angegeben, kann am unteren, offenen Niethülsenschaftende die Korrosionsschutzschicht sich noch über die innere Oberfläche einige Millimeter, insbesondere 3 bis 12 mm, in die Niethülse hinein erstrecken, und zwar dort, wo der Schließkopf ausgeformt wird. Hierbei kommt es zu Dehnungen des Materials, welche die Korrosionsschutzschicht bruchlos mitmachen muss, da auch an diesen Stellen Kammern entstehen, welche alkalische Flüssigkeiten ansammeln.

Beim erfindungsgemäßen Verfahren zur Herstellung eines Niets, insbesondere eines Aluminium-Niets, bevorzugt eines Aluminium-Blindniets zur Befestigung schwimmender Platten, mit einem Nietschaft und einem Nietkopf, wobei zumindest der Nietkopf mit einer witterungsbeständigen Farbschicht versehen wird, wird zumindest auf die Teile der Nietoberfläche, die im Befestigungszustand zu möglichen Flüssigkeitsansammlungen hin liegen, eine Korrosionsschutzschicht aufgebracht.

In bevorzugter Ausführung wird bei der Herstellung eines Blindniets mit einem Hülsenschaft die Korrosionsschutzschicht über die gesamte Außenoberfläche des Niets aufgebracht, und zwar an der Außenfläche des Kopfes unter der Farbschicht und am offenen Niethülsenschaftende zumindest teilweise über die innere Oberfläche, bevorzugt im Bereich des auszuformenden Schließkopfes.

An den mit der Farbschicht versehenen Stellen, insbesondere am Nietkopf, wird bevorzugt mindestens eine Vermittlerschicht zwischen der Korrosionsschicht und der Farbschicht aufgebracht, wobei die Vermittlerschicht als ein Material aufgebracht wird, welches die Beständigkeit der Farbschicht sicherstellt, und insbesondere deren Haftung. Unter der Farbschicht und insbesondere über der Vermittlerschicht kann eine Grundierungsschicht aufgebracht werden, während die Korrosionsschutzschicht selbst ebenfalls als mehrlagige Schicht aufbringbar ist.

Insbesondere ist die Korrosionsschutzschicht eine Schutzschicht gegen alkalische Korrosion, insbesondere bei Aluminium-Nieten und bevorzugt weist sie eine flexible Härte auf, die es ihr gestattet, sich bruchlos zu dehnen, insbesondere bei der Materialaufweitung beim Herstellen des Schließkopfes.

Der auf dem Niet aufgebrachte Schichtaufbau kann in einfacher, zweifacher oder dreifacher Beschichtung erfolgen, und die Beschichtung weist vorteilhafterweise eines oder mehrere der folgenden Merkmale auf:
- die warm aufgetragene Korrosionsschutzschicht ist ein Zweikomponentenlack auf E-poxidharzbasis, zusammengesetzt aus Lösemitteln, Bindemitteln, Pigmente, Extendern und Hilfsstoffen;
- die Vermittlerschicht ist ein Zweikomponenten-Haftvermittler auf Polyurethan-Basis;
- die Grundierungsschicht ist ähnlich, insbesondere ebenso wie die Vermittlerschicht aufgebaut und weist ferner Extender und Hilfsstoffe auf;
- die Farbschicht ist eine Decklackschicht aus einem Zweikomponentenlack auf Polyurethanbasis, und insbesondere besteht der Lack aus Polyol auf Acrylartbasis und wird mit einem aliphatischen Polyisocyanat ausgehärtet.

Bei der Auswahl der Komponenten für den genannten Beschichtungsaufbau handelt es sich um eine speziell für diese Anwendung erstellte Rezeptur, die sowohl im Hinblick auf die verwendeten Anteile als auch im Hinblick auf das Mischungsverhältnis einzigartig ist. Nur so sind die gewünschten Eigenschaften der guten Haftung innerhalb des Beschichtungsaufbaus und des guten Korrosionsschutzes gewährleistet.

Die Ausführungsformen des Verfahren weisen die schon für den Niet selbst angesprochenen Merkmale und Vorteile entsprechend auf.

Bei einem bevorzugten Herstellungsverfahren erfolgt die Aushärtung der Schichten in einem Ofen, und zwar so, dass die inneren Schichten vor den äußeren Schichten aushärten und eine Abbindung zwischen den Schichten erfolgt. Dies ist einerseits so lösbar, dass die Temperaturen über den Ofengang so eingerichtet werden, dass die Schichten von der Nietoberfläche her bis zur obersten Schicht hin abfolgend getrocknet bzw. ausgehärtet werden; andererseits können die Schichtmaterialien so ausgewählt werden, dass die inneren Schicht vor den äußeren Schichten aushärten und so eine Abbindung zwischen den Schichten erfolgt, ohne dass im Ofengang unterschiedliche Temperaturen hergestellt werden müssen. Natürlich können die beiden oben genannten Methoden auch kombiniert werden.

Mit den obigen Verfahrensgestaltungen kann sichergestellt werden, dass keine Blasenbildung bzw. Kräuselung an der Kopfoberfläche eintritt, die dann auftreten würde, wenn die Farboberfläche ausgehärtet ist, bevor der Untergrund seine notwendige Härte erreicht hat. Es ist noch zu bemerken, dass die Farbschichten bzw. Grundierungen sowie die Korrosionsschutzschicht, insbesondere zur Aushärtung im Ofen, untereinander verträglich sein müssen, um den Qualitätseffekt zu erreichen, dass die Farbschicht am Nietkopf hält und die Laugenbeständigkeit des Niets vorhanden ist. Dies muss für immerhin ca. 2000 verschiedene, unterschiedliche Farben erfüllt sein.

Die Erfindung wird im Weiteren anhand einer bevorzugten Ausführungsform näher erläutert. In den anliegenden Zeichnungen zeigen:
- Figuren 1 bis 3: einen Aluminium-Blindniet mit Nietdorn (Figur 1), Niethülse (Figur 2) und im zusammengebauten Zustand (Figur 3);
- Figur 4: einen in die Fassade eingesetzten Blindniet vor der Ausbildung des Schließkopfes;
- Figur 5: den Blindniet kurz nach der Ausbildung des Schließkopfes; und
- Figur 6: eine fertige Vernietung mit Schließkopfbildung und Abriss des Nietdornes an der Sollbruchstelle.

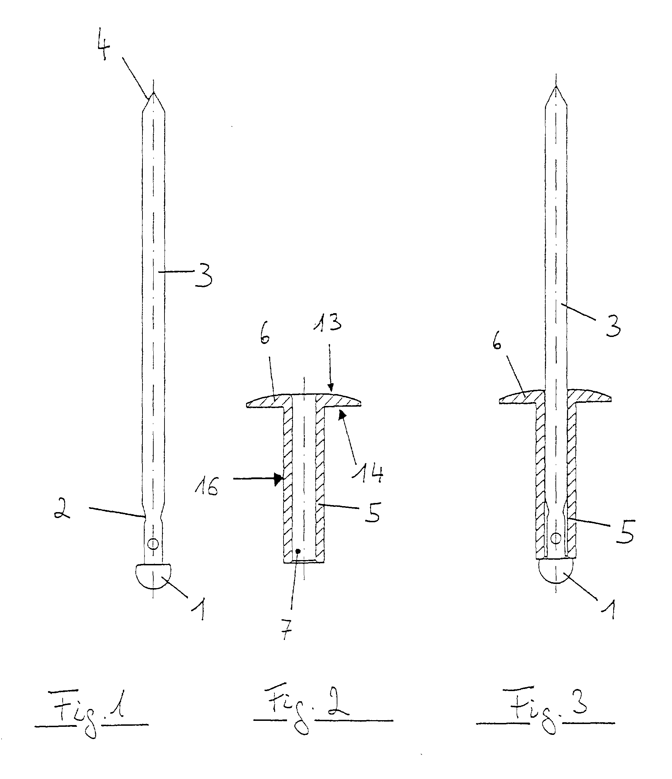

In den Figuren 1 bis 3 wird der Aufbau des erfindungsgemäßen Aluminium-Blindniets erläutert. In Figur 1 ist der Nietdorn zu sehen, der aus Edelstahl besteht und unten den Nietdornkopf 1 aufweist, der am Nietdornschaft 3 angebracht ist, welcher an der anderen Seite in der Nietdornspitze 4 endet. Etwas oberhalb des Nietdornkopfes 1 weist der Nietdorn die Sollbruchstelle 2 auf.

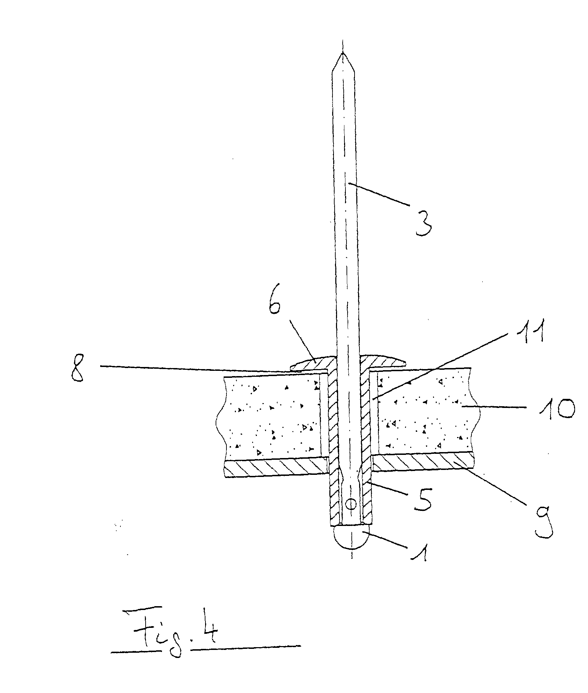

Die Figur 2 zeigt den eigentlichen Aluminium-Niet als Niethülse 5 mit dem Niethülsensetzkopf 6, der im Weiteren auch als Kopf 6 bezeichnet wird. Der Niet weist auf seiner gesamten Oberfläche die Korrosionsschutzschicht auf, und zwar auf der Kopfunterseite 14, an der Schaftaußenseite 16 und auch über einen gewissen Weg in den unteren Teil der Hülse hinein, an der mit 7 bezeichneten Oberfläche. Auf der Kopfoberseite ist noch eine Farblackschicht 13 aufgebracht, die in der Farbe jeweils zu den zu befestigenden Platten passt. Hierzu wird die Niethülse 5, 6 zunächst vollständig mit der Korrosionsschutzschicht überzogen, auch an der Oberseite des Kopfes 6, worauf dann eine Vermittlerschicht aufgetragen wird, die dafür sorgt, dass die Farbschicht auf dem Nietkopf 6 als äußerste Schicht haften und hart werden kann.

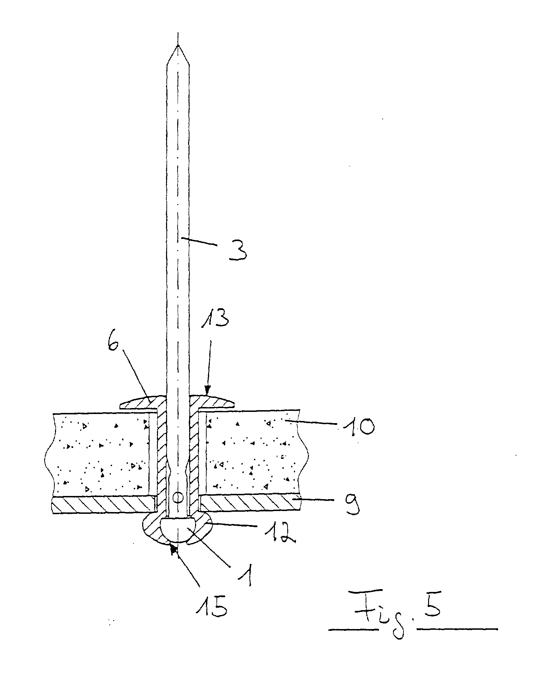

Zusammengebaut ist der Niet montagefähig in Figur 3 gezeigt, wobei der Nietdornschaft 3 von unten in den Hohlkanal des Niethülsenschaftes 5 so eingeführt ist, dass der Nietdornkopf 1 unten am offenen Ende des Schaftes 5 ansteht.

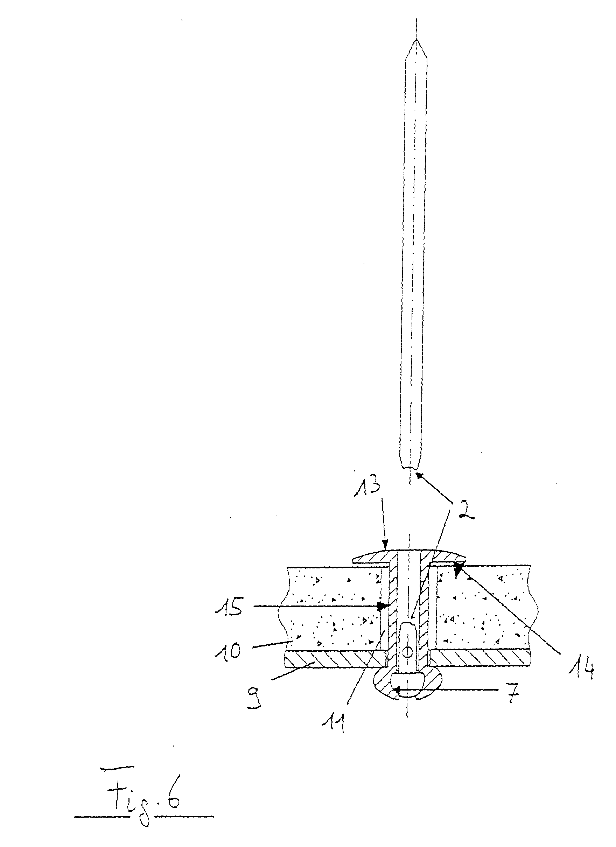

Die Figur 4 zeigt den in die Fassade eingesetzten Niet vor dem Festlegen. Die Fassade besteht aus der Unterkonstruktion 9, die in diesem Fall aus Aluminium besteht und der dort aufgesetzten Faserplatte 10, beispielsweise hergestellt aus Faserzement. Die Bohrung für den Niet in der Unterkonstruktion 9 entspricht in etwa im Durchmesser dem Außendurchmesser des Niets, während die Bohrung in der Fassadenplatte 10 einen wesentlich größeren Durchmesser aufweist. Dieser vergrößerte Durchmesser ist notwendig, um es der Fassadeplatte 10 zu gestatten, sich bei Temperaturänderungen auszudehnen oder zusammenzuziehen, ohne am Niet anzustoßen bzw. den Niet mit zu hohen Scherkräften zu belasten. Es entsteht eine Kammer 11 zwischen der Nietaußenseite und der Innenseite der Bohrung in der Fassadenplatte 10. Ferner ist der Figur 4 noch zu entnehmen, dass der Nietkopf 6 nicht direkt auf der Außenseite der Faserplatte 10 aufliegt, sondern einen gewissen Abstand zu dieser aufweist. Auch dieser Abstand dient dazu, der Platte 10 die notwendige Bewegungsmöglichkeit einzuräumen. Auch zwischen der Unterseite des Kopfes 6 und der Außenseite der Platte 10 entsteht eine offene Kammer, die in Figur 4 mit 8 bezeichnet ist.

Wegen dieser notwendigerweise offenen Struktur können sich in den Kammern 8 und 11 Wasseransammlungen (Regenwasser) bilden, die dann zusammen mit ausgespültem Zement eine alkalisch-korrosive Flüssigkeit bzw. Lauge bilden, welche den Niet angreifen würde, wäre er nicht an dem mit 14 und 16 in Figur 2 bezeichneten Stellen mit der Korrosionsschutzschicht versehen.

Die Figur 5, die den Niet nach der Ausbildung des Schließkopfes durch das Herausziehen des Nietdornschaftes 3 darstellt, zeigt eine weitere Stelle auf, an der es zur Korrosion kommen kann, und zwar die mit dem Bezugszeichen 15 bezeichnete Stelle in dem Schließkopf 12 um den Nietdornkopf 1 herum. Auch hier können Hohlräume und Kammern entstehen, welche korrosives Medium beinhalten.

Anhand der in Figur 6 dargestellten fertigen Vernietung, bei der Nietdornschaft an der Sollbruchstelle 2 abgebrochen und entfernt wurde, wird nochmals ersichtlich, dass der Niet mit seiner Korrosionsschutzschicht an allen kritischen Stellen geschützt ist, und zwar an der Kopfunterseite in dem mit dem Bezugszeichen 14 angedeuteten Schichtbereich, in der Kammer 11 durch die Oberfläche der Korrosionsschutzschicht an der mit 15 bezeichneten Fläche und um den Nietdornkopf herum in dem Bereich 7, der, wie anhand der Figur 2 oben erläutert wurde, ebenfalls über eine gewisse Strecke in die Niethülse hinein mit der Korrosionsschutzschicht versehen wird. Es sollte grundsätzlich genügen, die Korrosionsschutzschicht im Bereich 7 nur soweit in den Hülsenschaft hinein einzubringen, dass der Schließkopfbereich mit dem daran anschließenden, verbleibenden Nietdornschaftstück abgedeckt ist. Aus dem offen verbleibendem Bereich der Hülse kann nämlich Regenwasser recht gut abfließen. Andererseits ist es natürlich auch möglich, die gesamte innere Oberfläche der Hülse mit dem Korrosionsschutz zu versehen, um auch jegliches verbleibende Restrisiko auszuschalten.

## Patentansprüche

1. Niet, insbesondere Aluminium-Blindniet zur Befestigung schwimmender Platten, mit einem Nietschaft (5) und einem Nietkopf (6), wobei zumindest der Nietkopf mit einer witterungsbeständigen Farbschicht (13) versehen ist, **dadurch gekennzeichnet, dass** er zumindest auf den Teilen seiner Oberfläche (7, 14, 16), die im Befestigungszustand zu möglichen Flüssigkeitsansammlungsräumen (11, 14, 15) hin liegen, eine Korrosionsschutzschicht aufweist.

2. Niet nach Anspruch 1, **dadurch gekennzeichnet, dass** er als Blindniet mit einem Hülsenschaft (5) ausgebildet ist, wobei sich die Korrosionsschutzschicht über die gesamte Außenoberfläche des Niets erstreckt, an der Außenoberfläche des Kopfes (6) unter der Farbschicht (13) liegt und sich insbesondere am offenen Niethülsenschaftende zumindest teilweise über die innere Oberfläche erstreckt, bevorzugt im Bereich des auszuformenden Schließkopfes (12).

3. Niet nach Anspruch 1 oder 2, **dadurch gekennzeichnet, dass** er an mit der Farbschicht versehenen Stellen, insbesondere am Nietkopf (6), mindestens eine Vermittlerschicht, insbesondere Haftvermittlerschicht, zwischen der Korrosionsschutzschicht und der Farbschicht aufweist.

4. Niet nach Anspruch 3, **dadurch gekennzeichnet, dass** die Vermittlerschicht aus einem Material besteht, welches die Beständigkeit der Farbschicht sicherstellt, und insbesondere deren Haftung.

5. Niet nach Anspruch 3 oder 4, **dadurch gekennzeichnet, dass** er unter der Farbschicht und insbesondere über der Vermittlerschicht eine Grundierungsschicht aufweist.

6. Niet nach einem der Ansprüche 1 bis 5, **dadurch gekennzeichnet, dass** die Korrosionsschutzschicht eine mehrlagige Schicht ist.

7. Niet nach einem der Ansprüche 1 bis 6, **dadurch gekennzeichnet, dass** die Korrosionsschutzschicht eine Schutzschicht gegen alkalische Korrosion ist, insbesondere bei Aluminium-Nieten.

8. Niet nach einem der Ansprüche 1 bis 7, **dadurch gekennzeichnet, dass** die Korrosionsschutzschicht eine flexible Härte aufweist, die es ihr gestattet, sich bruchlos zu dehnen, insbesondere bei der Materialaufweitung beim Herstellen des Schließkopfes (12).

9. Niet nach einem der Ansprüche 1 bis 8, **dadurch gekennzeichnet, dass** der darauf aufgebrachte, ein-, zwei- oder dreifache Schichtaufbau der Beschichtung gemäß einem oder mehreren der folgenden Merkmale ausgebildet ist:
- die warm aufgetragene Korrosionsschutzschicht ist ein Zweikomponentenlack auf Epoxidharzbasis, zusammengesetzt aus Lösemitteln, Bindemitteln, Pigmente, Extendern und Hilfsstoffen;
- die Vermittlerschicht ist ein Zweikomponenten-Haftvermittler auf Polyurethan-Basis;
- die Grundierungsschicht ist ähnlich, insbesondere ebenso wie die Vermittlerschicht aufgebaut und weist ferner Extender und Hilfsstoffe auf;
- die Farbschicht ist eine Decklackschicht aus einem Zweikomponentenlack auf Polyurethanbasis, und insbesondere besteht der Lack aus Polyol auf Acrylartbasis und wird mit einem aliphatischen Polyisocyanat ausgehärtet.

10. Verfahren zur Herstellung eines Niets, insbesondere eines Aluminium-Blindniets zur Befestigung schwimmender Platten, mit einem Nietschaft (5) und einem Nietkopf (6), wobei zumindest der Nietkopf mit einer witterungsbeständigen Farbschicht (13) versehen wird, bei dem zumindest auf den Teilen der Nietoberfläche (7, 14, 16), die im Befestigungszustand zu möglichen Flüssigkeitsansammlungsräumen (11, 14, 15) hin liegen, eine Korrosionsschutzschicht aufgebracht wird.

11. Verfahren nach Anspruch 10, zur Herstellung eines Blindniets mit einem Hülsenschaft (5), bei dem die Korrosionsschutzschicht über die gesamte Außenoberfläche des Niets aufgebracht wird, und zwar an der Außenoberfläche des Kopfes (6) unter der Farbschicht (13) und am offenen Niethülsenschaftende zumindest teilweise über die innere Oberfläche, bevorzugt im Bereich des auszuformenden Schließkopfes (12).

12. Verfahren nach Anspruch 10 oder 11, bei dem an mit der Farbschicht versehenen Stellen, insbesondere am Nietkopf (6), mindestens eine Vermittlerschicht zwischen der Korrosionsschutzschicht und der Farbschicht aufgebracht wird.

13. Verfahren nach Anspruch 12, bei dem als Vermittlerschicht ein Material aufgebracht wird, welches die Beständigkeit der Farbschicht sicherstellt, und insbesondere deren Haftung.

14. Verfahren nach Anspruch 12 oder 13, bei dem unter der Farbschicht und insbesondere über der Vermittlerschicht eine Grundierungsschicht aufgebracht wird.

15. Verfahren nach einem der Ansprüche 10 bis 14, bei dem die Korrosionsschutzschicht als mehrlagige Schicht aufgebracht wird.

16. Verfahren nach einem der Ansprüche 10 bis 15, bei dem als Korrosionsschutzschicht eine Schutzschicht gegen alkalische Korrosion aufgebracht wird, insbesondere bei Aluminium-Nieten.

17. Verfahren nach einem der Ansprüche 10 bis 16, bei dem als Korrosionsschutzschicht eine solche aufgebracht wird, die eine flexible Härte aufweist, die es ihr gestattet, sich bruchlos zu dehnen, insbesondere bei der Materialaufweitung beim Herstellen des Schließkopfes (12).

18. Verfahren nach einem der Ansprüche 10 bis 17, bei dem die Aushärtung der Schichten in einem Ofen so erfolgt, dass die inneren Schichten vor den äußeren Schichten aushärten und eine Abbindung zwischen den Schichten erfolgt.

19. Verfahren nach Anspruch 18, bei dem die Temperaturen über den Ofengang so eingeregelt werden, dass die Schichten von der Nietoberfläche her bis zur obersten Schicht hin abfolgend getrocknet bzw. ausgehärtet werden.

20. Verfahren nach Anspruch 18 oder 19, bei dem die Schichtmaterialien so ausgewählt werden, dass die inneren Schichten vor den äußeren Schichten aushärten und eine Abbindung zwischen den Schichten erfolgt.

21. Verfahren nach einem der Ansprüche 10 bis 20, bei dem der Schichtaufbau der Beschichtung ein-, zwei- oder dreifache aufgebracht und gemäß einem oder mehreren der folgenden Merkmale ausgebildet wird:
- die Korrosionsschutzschicht wird warm aufgetragen, als ein Zweikomponentenlack auf Epoxidharzbasis, zusammengesetzt aus Lösemitteln, Bindemitteln, Pigmente, Extendern und Hilfsstoffen;
- die Vermittlerschicht wird aufgetragen als ein Zweikomponenten-Haftvermittler auf Polyurethan-Basis;
- die Grundierungsschicht wird ähnlich, insbesondere ebenso wie die Vermittlerschicht aufgetragen und weist ferner Extender und Hilfsstoffe auf;
- die Farbschicht wird als eine Decklackschicht aus einem Zweikomponentenlack auf Polyurethanbasis aufgetragen, insbesondere als Lack aus Polyol auf Acrylartbasis und wird mit einem aliphatischen Polyisocyanat ausgehärtet.
